# EUROPEAN PATENT SPECIFICATION

(11) **EP 0 395 055 B1**
(45) Date of publication and mention of the grant of the patent: **13.04.1994**
(21) Application number: 90107948.3
(22) Date of filing: 26.04.1990
(51) Int. Cl.: C08F 210/06

(54) **Syndiotactic polypropylene copolymer**
Syndiotaktisches Polypropylencopolymer
Copolymère syndiotactique de propylène

(30) Priority: 28.04.1989 JP 107490/89; 01.06.1989 JP 137402/89; 10.08.1989 JP 205785/89; 10.08.1989 JP 205786/89; 20.09.1989 JP 241910/89; 27.10.1989 JP 278619/89; 27.11.1989 JP 304683/89
(43) Date of publication of application: 31.10.1990
(73) Proprietor: MITSUI TOATSU CHEMICALS, Inc., Chiyoda-Ku Tokyo 100 (JP)
(72) Inventor: Asanuma, Tadashi, Takaishi-shi, Osaka-fu (JP); Shiomura, Tetsunosuke, Shibuya-ku, Tokyo (JP); Uchikawa, Nobutaka, Takaishi-shi, Osaka-fu (JP); Sasaki, Tateyo, Takaishi-shi, Osaka-fu (JP); Uchida, Osamu, Takaishi-shi, Osaka-fu (JP); Iwatani, Tutomu, Takaishi-shi, Osaka-fu (JP)
(74) Representative: Schüler, Horst, Dr.

(56) References cited:
- EP-A- 0 351 392
- JOURNAL OF THE AMERICAN CHEMICAL SOCIETY, vol. 110, 1988, pages 6255-6256, American Chemical Society; J.A. EWEN et al.: "Syndiospecific propylene polymerizations with group 4 metallocenes"

## Description

### (i) Field of the Invention

The present invention relates to a syndiotactic polypropylene copolymer. More specifically, the present invention relates to a copolymer having high syndiotacticity of propylene and another olefin.

### (ii) Description of the Prior Art

A syndiotactic polypropylene has been known for a long time. Such a conventional polypropylene can be prepared by a low temperature polymerization in the presence of a catalyst comprising a vanadium compound, an ether and an organic aluminum, but this kind of polypropylene is poor in syndiotacticity and scarcely exhibits characteristics of syndiotactic polypropylene. In addition, a copolymer of an α-olefin and propylene is hardly considered to be a crystalline polypropylene. On the other hand, a polypropylene having good tacticity, i.e., a syndiotactic pentad fraction of more than 0.7 has been discovered for the first time by J. A. Ewen et al. which can be obtained by the use of a catalyst comprising a transition metal compound having an asymmetric ligand and aluminoxane (J. Am. Chem. Soc., 110, 6255-6256, 1988).

The above-mentioned method which has been suggested by J. A. Ewen et al. exhibits high catalytic activity per unit amount of the transition metal, and can provide a polymer having a high tacticity and relatively properly balanced physical properties, but moled articles of this kind of polymer are inconveniently poor in transparency and unsatisfactory in impact resistance.

### SUMMARY OF THE INVENTION

The present inventors have intensively conducted research on a syndiotactic polypropylene having excellent impact resistance balance and good transparency by which the above-mentioned problems can be solved, and as a result, they have achieved the present invention.

The present invention is directed to a syndiotactic polypropylene copolymer comprising 70 to 99.9 mole% of propylene and 0.1 to 30 mole% of at least one olefin having 2 or 4 to 25 carbon atoms wherein in the ¹³C-NMR spectrum of said syndiotactic polypropylene copolymer, said copolymer exhibits a ratio of the intensity of a peak at about 20.2 ppm to the sum of the intensities of the total peaks attributable to methyl groups in propylene units at about 19 - 22 ppm of 0.3 or more.

The ¹³C-NMR spectrum can be obtained by measuring in a 1,2,4-trichlorobenzene solution of the copolymer on the basis of tetramethylsilane, and the ratio of the intensity of the peak at about 20.2 ppm to the sum of the intensities of the total peaks attributable to the methyl groups in the propylene units at about 19-22 ppm is a measure for indicating the syndiotacticity of the copolymer. It is known that the syndiotacticity can be defined as a syndiotactic pentad fraction obtained by analyzing the ¹³C-NMR spectrum of the homopolymer of propylene (A. Zambelli et al., Macromolecules, Vol. 6, 687, 1973, and the same, Vol. 8, 925, 1975). On the contrary, in the present invention, the above ratio denotes a degree of the syndiotacticity of the propylene chain in the copolymer, and the larger the ratio is, the higher the syndiotacticity of the copolymer.

Molded articles manufactured from the copolymer of the present invention are excellent in transparency and impact resistance as compared with molded products obtained from a conventional syndiotactic polypropylene.

### DETAILED DESCRIPTION OF THE INVENTION

One example of a catalyst used to manufacture a propylene copolymer of the present invention is a catalyst comprising a transition metal compound having an asymmetric ligand and aluminoxane described in the aforesaid literature. In addition, another catalyst can also be used, so long as it can provide the homopolymer of propylene having a relatively high tacticity, i.e., a syndiotactic pentad fraction of about 0.7 or more.

Examples of the catalyst which can be used to manufacture the copolymer of the present invention include transition metal compounds mentioned in the aforesaid literature, i.e., isopropyl(cyclopentadienyl-1-fluorenyl)hafnium dihalogenides and isopropyl(cyclopentadienyl-1-fluorenyl)zirconium dihalogenides as well as these transition metal compounds in which at least one of halogen atoms is substituted with alkyl group. Furthermore, examples of the aluminoxane include compounds represented by the general formula 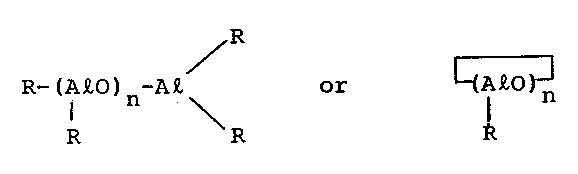
wherein R is a hydrocarbon residue having 1 to 3 carbon atoms. In particular, a methylaluminoxane is suitably used in which R is a methyl group and n is 5 or more, preferably 10 or more. The amount of the aluminoxane is 10 to 1000000 mole times, usually 50 to 5000 mole times as much as that of the transition metal compound. In addition to the above-mentioned catalysts, other catalysts can also be used which comprise combinations of boron compounds shown in, for example, Japanese Laid-open Patent Publication Nos. 1-501950 and 1-502036 and the transition metal compounds in which at least one of the halogen atoms is substituted with an alkyl group.

The employment of the above-mentioned catalysts permits copolymerizing propylene and another olefin at an extremely high random level, whereby the copolymer of the present invention can be characterized.

Examples of olefins other than propylene in the present invention include α-olefins having 2 and 4 to 25 carbon atoms which are ethylene and α-olefins represented by the general formula

H₂C=CH-(CH₂)ₙCH₃ (n is a value of 1 to 22)

and α-olefins represented by a formula where the -(CH₂)ₙCH₃ group in the above-mentioned formula is replaced with a branched alkyl group, for example, branched α-olefins such as 3-methylbutene-1, 4-methylpentene-1 and 4,4-dimethylpentene-1. They may be used in combination of two or more thereof on the condition that the total of these olefins is in the range of 0.1 to 30 mole% of all the constitutional monomers.

Preferable examples of the olefins other than propylene include ethylene, butene, 4-methylpentene-1, hexene-1, a combination of ethylene and butene, and a combination of ethylene and an α-olefin having 6 carbon atoms.

No particular restriction is put on polymerization conditions for the manufacture of the copolymer of the present invention, and various polymerization techniques are utilizable such as a solvent polymerization using an inert solvent, mass polymerization in which there is substantially no inert solvent, and gas phase polymerization. Usually, the polymerization temperature is from -100 to 200°C and the polymerization pressure is from atmospheric pressure to 101 bar (100 kg/cm²G), and preferably the temperature is from -100 to 100°C and the pressure is from atmospheric pressure to 51 bar (50 kg/cm²G). The polymerization is carried out substantially in one step, and the resulting copolymer is the so-called random copolymer.

In the present invention, it is important that amounts of the monomers are controlled so that a ratio of the α-olefin other than propylene to the total constitutional monomer units of the copolymer is from 0.1 to 30 mole% and that in the ¹³C-NMR spectrum of the copolymer, a ratio of the intensity of a peak at about 20.2 ppm to the sum of the intensities of the total peaks attributable to methyl groups in propylene units at about 19-22 ppm is 0.3 or more.

In order to meet the conditions regarding the ¹³C-NMR spectrum of the copolymer, it has been found that the preparation of the copolymer should be carried out as follows:
Copolymerization is effected by the use of a high-purity transition metal compound and a relatively small amount of the α-olefin other than propylene at a relatively low temperature. In this case, the resulting copolymer already meets the above-mentioned requirements of the ¹³C-NMR spectrum, even if not subjected to a post-treatment such as washing with a solvent. The above-mentioned copolymerization conditions are such that a homopolymer having a syndiotactic pentad fraction of 0.7 or more is obtained by homopolymerizing propylene. Concretely speaking, the purity of the transition metal compound is usually 90% or more, although this value may vary depending upon the activity of existing impurities, and the amount of the α-olefin other than propylene is usually 10% by weight or less. Furthermore, the polymerization temperature is 100°C or less.

When the copolymer obtained by the copolymerization does not meet the above-mentioned requirements of the ¹³C-NMR spectrum, the copolymer should be washed with a solvent, whereby the requirements can be met. The solvent which can be used in the present invention is one that can dissolve or disperse the low-molecular atactic component, and examples of the solvent include hydrocarbons having 3 to 20 carbon atoms, alcohols having 1 to 20 carbon atoms, and ethers and esters having 2 to 20 carbon atoms. Examples of these hydrocarbons include propylene itself, saturated hydrocarbons such as propane, butane, pentane, hexane, heptane, octane and nonane, aromatic hydrocarbons such as benzene, toluene, xylene and ethylbenzene, and other hydrocarbons in which a part or all of hydrogen atoms are substituted with a halogen such as fluorine, chlorine, bromine or iodine. Examples of the alcohols include methanol, ethanol, propanol, butanol, pentanol, hexanol and benzyl alcohol. Examples of the ethers include diethyl ether, dipropyl ether, dibutyl ether, dipentyl ether, dihexyl ether and diphenyl ether, and examples of the esters include methyl acetate, ethyl acetate, propyl acetate, butyl acetate, ethyl benzoate and butyl benzoate.

Any washing technique can be used without particular restriction, so long as it permits dissolving a part of the copolymer which is soluble in the solvent and separating the soluble portion from the insoluble portion. In the present invention, there can be employed a usual process of dispersing the copolymer in the solvent and then separating the soluble portion from the insoluble portion by decantation, centrifugation or filtration, or a process of using a countercurrent washing tower in which the copolymer is brought into contact with the solvent in a countercurrent way. A washing temperature can be optionally selected from temperatures which are lower than the melting point of the copolymer and at which the solvent is in the liquid state, and it is generally in the range of 0 to 100°C. Usually, the washing is carried out at ambient temperature. In one washing operation, the amount of the solvent is preferably equal to or more than the apparent volume of the copolymer. If the above-mentioned requirements of the ¹³C-NMR spectrum cannot be met by one washing operation, it is necessary to repeat this washing operation several times.

When in the ¹³C-NMR spectrum of the syndiotactic polypropylene copolymer, a ratio of the intensity of a peak at about 20.2 ppm to the sum of the intensities of the total-peaks attributable to methyl groups in propylene units at about 19-22 ppm is less than 0.3, molded products of this copolymer are poor in transparency and impact resistance, and in addition, the surfaces of the molded articles become sticky.

When a ratio of the α-olefin other than propylene to the total constitutional monomer units of the copolymer is less than 0.1 mole%, the impact resistance and transparency of the copolymer are poor, and conversely when it is in excess of 30 mole%, stiffness deteriorates. Considering a balance between the stiffness and the impact resistance as well as transparency, it is preferred that the ratio of the α-olefin other than propylene to the total constitutional monomer units of the copolymer is in the range of 0.1 to 30 mole%.

In the case that the constitutional unit other than propylene is only ethylene, the amount of the ethylene unit is preferably from 0.1 to 20% by weight; in the case of butene only, it is preferably from 0.13 to 30% by weight; in the case of 4-methylpentene-1 only and in the case of hexene-1 only, it is preferably from 0.19 to 30% by weight; in the case of ethylene and butene, the amount of the ethylene unit is preferably from 0.1 to 20% by weight and that of the butene unit is preferably 0.13 to 20% by weight; and in the case of ethylene and an olefin having 6 carbon atoms, the amount of the ethylene unit is preferably from 0.1 to 20% by weight and that of the olefin unit is preferably from 0.19 to 20% by weight.

Furthermore, in the case that the constitutional unit other than propylene is ethylene, butene, 4-methylpentene-1 or hexene-1 only, it is preferred that in the ¹³C-NMR spectrum of the syndiotactic polypropylene copolymer, the ratio of the intensity of a peak at about 20.2 ppm to the sum of the intensities of the total peaks at about 19-22 ppm is 0.5 or more.

When ethylene and butene, or ethylene and an α-olefin having 6 carbon atoms are used as the α-olefins other than propylene to achieve terpolymerization, the transparency of the products is further improved.

In the present invention, no particular restriction is put on the molecular weight of the copolymer, so long as the copolymer can be utilized as a usual polymer, but in general, it is preferred that the molecular weight of the copolymer is 0.05 or more in terms of an intrinsic viscosity measured in a tetralin solution at 135°C, or about 1000 or more in terms of a number average molecular weight measured by gel permeation chromatography and corrected in terms of propylene.

Now, the present invention will be described in more detail.

### Example 1

In 1 liter of toluene in a 2-liter autoclave were dissolved 5 mg of isopropyl(cyclopentadienyl-1-fluorenyl)-zirconium dichloride and 0.67 g of methylaluminoxane having a polymerization degree of about 15. Here, the aforesaid isopropyl(cyclopentadienyl-1-fluorenyl)zirconium dichloride was that which was obtained by introducing lithium into isopropylcyclopentadienyl-1-fluorene synthesized in an ordinary manner and then reacting the same with zirconium tetrachloride, and the aforesaid methylaluminoxane was that which was obtained by reacting copper sulfate hexahydrate with trimethylaluminum in toluene. Afterward, propylene was added to the resulting solution at 30°C until a level of 3 bar (2 kg/cm²G) had been reached, and ethylene was then added thereto at this temperature at a ratio of 1.0 g/minute over 1 minute at an interval of 10 minutes, while propylene was added so that polymerization pressure might always be 3 bar (2 kg/cm²G). in order to continue polymerization for 1 hour. After the unpolymerized monomers had been purged, the autoclave was opened, and the contents thereof were filtered under suction at 25°C by the use of a device comprising a Nutsche and a filter bottle. Next, 1 liter of toluene was added to the resulting powdery copolymer on the Nutsche, followed by filtering under suction, and this operation was repeated at 25°C 5 times. After this washing step, the copolymer was dried at 80°C under reduced pressure in order to obtain 32 g of the powdery copolymer. According to ¹³C-NMR analysis, it was confirmed that the ethylene unit was present in a ratio of 7.4% by weight (10.7 mole%) in the copolymer. With regard to binary units in the copolymer, propylene-propylene was present in a ratio of 0.828, propylene-ethylene in a ratio of 0.130, and ethylene-ethylene in a ratio of 0.042. With regard to three-component units, propylene-propylene-propylene was present in a ratio of 0.861, propylene-propylene-ethylene in a ratio of 0.012, ethylene-propylene-ethylene in a ratio of 0.020, ethylene-ethylene-ethylene in a ratio of 0.008, ethylene-ethylene-propylene in a ratio of 0.041, and propylene-ethylene-propylene in a ratio of 0.058, which indicated that the copolymer was very rich in random properties. A ratio of the intensity of a peak at about 20.2 ppm to the sum of the intensities of the total peaks at about 19-22 ppm was 0.89. Furthermore, the intrinsic viscosity (hereinafter referred to as "η") of the copolymer measured in a tetralin solution at 135°C was 1.26, and a ratio of a weight average molecular weight to a number average molecular weight (hereinafter referred to as "MW/MN") measured in a 1,2,4-trichlorobenzene solution at 135°C was 2.2. The resulting copolymer powder was then press-molded at 210°C in order to form a sheet having a thickness of 1 mm, and properties and physical properties were measured as follows:

| | |
|---|---|
| Flexural stiffness bar (kg/cm²) | ASTM D747 (23°C) |
| Tensile yield strength bar (kg/cm²) | ASTM D638 (23°C) |
| Elongation (%) | ASTM D638 (23°C) |
| Izod impact strength (notched) (kg·cm/cm) | ASTM D256 (23°C, -10°C) |
| Haze (%) | ASTM D1003 |

The flexural stiffness was 2800 kg/cm², the tensile yield strength was 200 bar (200 kg/cm²), the elongation was 773%, and values of Izod impact strength were 68 and 2.1 kg·cm/cm (at 23°C and -10°C, respectively), and the haze was 44%.

### Comparative Example 1

The same polymerization used in Example 1 was repeated except that no ethylene was used, thereby obtaining a polymer, and the latter was then subjected to post-treatment to form a sheet. For the polymer and the sheet, properties and physical properties were measured. As a result, η was 1.28, syndiotactic pentad fraction was 0.92, MW/MN was 2.1, flexural stiffness was 4700 bar (4700 kg/cm²), tensile yield strength was 224 bar (224 kg/cm²), elongation was 740%, values of Izod impact strength were 14.1 and 2.1 kg·cm/cm (at 23°C and -10°C, respectively), and haze was 68%.

### Example 2

In a 5-liter autoclave was placed 1500 g of propylene, and 10 mg of isopropyl(cyclopentadienyl-1-fluorenyl)zirconium dichloride and 1.34 g of methyl-aluminoxane having a polymerization degree of about 15 were then injected thereinto at 30°C. The mixture was stirred for 1 hour, while ethylene was added thereto every 2 g at 30°C at an interval of 10 minutes, so as to carry out polymerization, and the unpolymerized propylene was then purged. Afterward, the autoclave was opened, and the resulting powdery copolymer was taken out and dispersed in 500 ml of hexane. The dispersion was then filtered under suction at 40°C by the use of a Nutsche and a filter bottle. Next, 500 ml of hexane was added to the powdery copolymer on the Nutsche, followed by filtering under suction, and this operation was repeated at 25°C 3 times. After this washing step, the copolymer was dried at 80°C under reduced pressure in order to obtain 145 g of a syndiotactic polypropylene copolymer. For the copolymer and a sheet obtained by press-molding the same, properties and physical properties were measured as in Example 1. As a result, η was 1.33, an ethylene unit was present in a ratio of 7.5% by weight (10.8 mole%) in the copolymer, a ratio of the intensity of a peak at about 20.2 ppm to the sum of the intensities of the total peaks at about 19-22 ppm was 0.88, MW/MN was 2.3, flexural stiffness of the sheet was 2100 bar (2100 kg/cm²), tensile yield strength was 200 bar (200 kg/cm²), elongation was 820%, and values of Izod impact strength were 78 and 3.2 kg·cm/cm (at 23°C and -10°C, respectively), and haze was 38%.

### Comparative Example 2

The same procedure as in Example 2 was effected except that no ethylene was used, thereby obtaining a polymer, and the latter was then subjected to post-treatment to form a sheet. For the polymer and the sheet, properties and physical properties were measured. As a result, η was 1.26, syndiotactic pentad fraction was 0.93, MW/MN was 2.1, and flexural stiffness was 5200 bar (5200 kg/cm²), tensile yield strength was 223 bar (223 kg/cm²), elongation was 785%, values of Izod impact strength were 18.5 and 2.7 kg·cm/cm (at 23°c and -10°C, respectively), and haze was 62%.

### Example 3

In a 2-liter autoclave, the same amount of the same catalyst as in Example 1 was dissolved in 1 liter of toluene, and propylene was placed therein at 30°C until a level of 6 bar (5 kg/cm²G) had been reached. Afterward, 45 g of butene-1 was injected thereinto at the same temperature, and polymerization reaction was carried out at 30°C for 2 hours, while propylene was added thereto so that the polymerization pressure might always be 6 bar (5 kg/cm²G). After the unpolymerized monomers had been purged, the autoclave was opened, and the contents thereof were filtered, washed with toluene (1 liter, 5 times) and dried in the same manner as in Example 1, thereby obtaining 64.3 g of a powdery copolymer. According to ¹³C-NMR analysis, it was confirmed that the butene-1 unit was present in a ratio of 15.1% by weight (11.8 mole%) in the copolymer, a ratio of the intensity of a peak at about 20.2 ppm to the sum of the intensities of the total peaks at about 19-22 ppm was 0.84, η was 1.23, and MW/MN was 2.1. In accordance with differential scan thermal anaylsis, the copolymer melted at 140°C and the temperature was then dropped at a rate of 10°C/minute, and in this case, the crystallization temperature measured as a peak temperature was 75.6°C and melting points at the time when temperature was raised were 121°C and 130°C. The copolymer powder was molded into a sheet in the same manner as in Example 1, and properties and physical properties were then measured. As a result, flexural stiffness was 5100 bar (5100 kg/cm²), tensile yield strength was 243 bar (243 kg/cm²), elongation was 763%, and values of Izod impact strength were 67 and 2.8 kg·cm/cm (at 23°C and -10°C, respectively), and haze was 52.6%.

### Example 4

In a 5-liter autoclave were placed 1500 g of propylene and 200 g of butene-1, and the same amount of the same catalyst as in Example 2 was injected thereinto at 30°C. Afterward, stirring was carried out at the same temperature for 2 hours so as to effect polymerization, and the unpolymerized monomers were purged. Then, the contents in the autoclave were filtered, washed with hexane (500 ml, 3 times) and dried in the same manner as in Exampel 2, thereby obtaining 148 g of a powdery copolymer which was insoluble in hexane. For the thus obtained copolymer, properties and physical properties were measured as in Example 1. As a result, η was 1.33, the butene-1 unit was present in a ratio of 21.5% by weight (17.0 mole%) in the copolymer, a ratio of the intensity of a peak at about 20.2 ppm to the sum of the intensities of the total peaks at about 19-22 ppm was 0.81. According to differential scan thermal analysis, crystallization temperature was 72.3°C and melting points were 128.5°C and 119.5°C, and MW/MN was 2.2. The copolymer powder was molded into a sheet in the same manner as in Example 1, and properties and physical properties were then measured. In consequence, flexural stiffness was 5500 bar (5500 kg/cm²), tensile yield strength was 254 bar (254(kg/cm²), elongation was 780%, and values of Izod impact strength were 66 and 3.2 kg·cm/cm (at 23°C and -10°C, respectively), and haze was 42.3%.

### Examle 5

In a 2-liter autoclave, the same amount of the same catalyst as in Example 1 was dissolved in 1 liter of toluene, and propylene was placed therein at 30°C until a level of 4 bar (3 kg/cm²G) had been reached. Afterward, 68 g of 4-methylpentene-1 was injected thereinto; and polymerization was carried out at 30°C for 1 hour, while propylene was added thereto so that polymerization pressure might always be 4 bar (3 kg/cm²G). After the unpolymerized monomers had been purged, the contents in the autoclave were filtered, washed with toluene (1 liter, 5 times) and dried in the same manner as in Example 1, thereby obtaining 70 g of a powdery copolymer.

According to ¹³C-NMR analysis, it was confirmed that the 4-methylpentene-1 unit was present in a ratio of 6.4% by weight (3.3 mole%) in the copolymer, a ratio of the intensity of a peak at about 20.2 ppm to the sum of the intensities of the total peaks at about 19-22 ppm was 0.88, η was 1.05, and MW/MN was 2.0. The copolymer powder was molded into a sheet in the same manner as in Example 1, and properties and physical properties were then measured. As a result, flexural stiffness was 2700 bar (2700 kg/cm²)? tensile yield strength was 129 bar (129 kg/cm²), elongation was 636%, and values of Izod impact strength were 58.4 and 3.4 kg·cm/cm (at 23°C and -10°C, respectively), and haze was 28%.

### Example 6

Into a 5-liter autoclave were injected 1000 g of propylene and 300 g of 4-methylpentene-1, and the same amount of the same catalyst as in Example 2 was added thereinto. Afterward, stirring was carried out at 30°C for 1 hour so as to effect polymerization, and the unpolymerized monomers were purged. Then, the contents in the autoclave were filtered, washed with hexane (500 ml, 3 times) and dried in the same manner as in Example 2, thereby obtaining 150 g of a powdery copolymer. For the thus obtained copolymer and a molded article thereof, properties and physical properties were measured. As a result, η was 0.98, the 4-methylpentene-1 unit was present in a ratio of 12.5% by weight (6.7 mole%) in the copolymer, a ratio of the intensity of a peak at about 20.2 ppm to the sum of the intensities of the total peaks at about 19-22 ppm was 0.83, MW/MN was 2.1, flexural stiffness was 1950 bar (1950 kg/cm²), tensile yield strength was 105 bar (105 kg/cm²),) elongation was 695%, and values of Izod impact strength were 78.2 and 3.3 kg·cm/cm (at 23°C and -10°C, respectively), and haze was 24%.

### Example 7

In a 2-liter autoclave, the same amount of the same catalyst as in Example 1 was dissolved in 1 liter of toluene, and propylene was placed therein at 30°C until a level of 4 bar (3 kg/cm²G) had been reached. Afterward, 68 g of hexene-1 was injected thereinto, and polymerization was carried out at 30°C for 1 hour, while propylene was added thereto so that polymerization pressure might always be 4 bar (3 kg/cm²G). After the unpolymerized monomers had been purged, the resulting powdery copolymer was mixed into a large amount of methanol at 25°C, and then filtered to obtain a powder. The latter was then washed with 1 liter of methanol at 25°C 5 times, and dried at 80°C under reduced pressure, thereby obtaining 80 g of a copolymer. According to ¹³C-NMR analysis, it was confirmed that the hexene-1 unit was present in a ratio of 14.3% by weight (7.7 mole%) in the copolymer, a ratio of the intensity of a peak at about 20.2 ppm to the sum of the intensities of the total peaks at about 19-22 ppm was 0.79, η was 1.18, and MW/MN was 3.9. The copolymer powder was molded into a sheet in the same manner, and properties and physcial properties were then measured. As a result, flexural stiffness was 1800 bar (1800 kg/cm²), tensile yield strnegth was 88 bar (88 kg/cm²), elongation was 753%, and values of Izod impact strength were 78.9 and 3.0 kg·cm/cm (at 23°C and -10°C, respectively), and haze was 23%.

### Example 8

Into a 5-liter autoclave was injected 1500 g of propylene and 300 g of hexene-1, and the same amount of the same catalyst as in Example 2 was added thereto. Afterward, stirring was carried out at 30°C 1 hour in order to effect polymerization. The unpolymerized propylene was then purged, and the resulting powder was taken out from the autoclave and then dispersed in 500 ml of hexane. The dispersion was filtered at 40°C and then washed with 500 ml of hexane at 25°C 3 times. After this washing step, the copolymer was dried at 80°C under reduced pressure in order to obtain 160 g of a powdery copolymer. For the copolymer and a press-molded sheet thereof, properties and physical properties were measured as in Example 1. As a result, η was 1.18, the hexene-1 unit was present in a ratio of 6.9% by weight (3.6 mole%) in the copolymer, a ratio of the intensity of a peak at about 20.2 ppm to the sum of the intensities of the total peaks at about 19-22 ppm was 0.85, MW/MN was 2.1, flexural stiffness was 2600 bar (2600 kg/cm²), tensile yield strength was 121 bar (121 kg/cm²), elongation was 680%, and values of Izod impact strength were 48.5 and 3.0 kg·cm/cm (at 23°C and -10°C, respectively), and haze was 28%.

### Example 9

In 2-liter autoclave, 5 mg of a purified material obtained by recrystallizing isopropyl(cyclopentadienyl-1-fluorenyl)zirconium dichloride used in Example 1 and 0.67 g of methylaluminoxane having a polymerization degree of 16 were dissolved in 1 liter of toluene. Afterward, 40 g of butene-1, 170 g of propylene and 23 g of ethylene were added thereto, and polymerization was carried out at 20°C for 30 minutes. The unpolymerized monomers were purged, and a large amount of methanol was added to the resulting copolymer, and the solution was afterward filtered at 25°C to obtain a powder. The latter was then washed with 1 liter of methanol at 25°C 2 times, and dried at 80°C under reduced pressure, thereby obtaining 78 g of a copolymer. According to ¹³C-NMR analysis, it was confirmed that the ethylene unit was present in a ratio of 8.6% by weight (12.8 mole%) and the butene-1 unit was present in a ratio of 12.9% by weight (9.6 mole%) in the copolymer, a ratio of the intensity of a peak at about 20.2 ppm to the sum of the intensities of the total peaks at about 19-22 ppm was 0.55, η was 0.78, and MW/MN was 2.5. The copolymer powder was molded into a sheet in the similar manner, and properties and physicl properties were then measured. As a result, tensile yield strength was 49 bar (49 kg/cm²), elongation was 137%, and values of Izod impact strength were 28 and 76 kg·cm/cm (at 23°C ad -10°C, respectively), and haze was 18%.

### Example 10

Into a 5-liter autoclave were injected 650 g of propylene, 60 g of butene-1, 40 g of ethylene and the same amount of the same catalyst as in Example 2 at 30°C. Afterward, stirring was carried out at 30°C for 30 minutes so as to effect polymerization, and the unpolymerized propylene was then purged. Afterward, the contents in the autoclave were filtered, washed with hexane (500 ml, 3 times) and dried in the same manner as in Example 2, thereby obtaining 295 g of a powdery copolymer.

For the thus obtained copolymer, properties and physical properties were measured in the same manner in Example 1. As a result, η was 0.92, the ethylene unit was present in a ratio of 5.5% by weight (8.2 mole%) and the butene-1 was present in a ratio of 8.5% by weight (6.0 mole%) in the copolymer, a ratio of the intensity of a peak at about 20.2 ppm to the sum of the intensities of the total peaks at about 19-22 ppm was 0.62, and MW/MN was 2.1. The copolymer powder was molded into a sheet in the similar manner, and properties and physical properteis were then measured. As a result, tensile yield strength was 68 bar (68 kg/cm²,), elongation was 156%, and values of Izod impact strength were 19 and 48 kg·cm/cm (at 23°C and -10°C, respectively), and haze was 24%.

### Example 11

Polymerization and post-treatments were carried out following the same procedure as in Example 10 except that butene-1 was replaced with hexene-1, so that 48 g of a powdery copolymer was obtained. According to ¹³C-NMR analysis, it was confirmed that the ethylene unit was present in a ratio of 6.5% by weight (9.7 mole%) and the hexene-1 unit was present in a ratio of 4.8% by weight (2.3 mole%) in the copolymer, a ratio of the intensity of a peak at about 20.2 ppm to the sum of the intensities of the total peaks at about 19-22 ppm was 0.61, η was 0.54, and MW/MN was 2.5. The copolymer powder was molded into a sheet having a thickness of 1 mm in the similar manner, and properties and physical properties were then measured. As a result, tensile yield strength was 87 bar (87 kg/cm²,) elongation was 177%, and values of Izod imapct strength were 26 and 58 kg·cm/cm (at 23°C and -10°C, respectively), and haze was 12%.

### Example 12

Polymerization and post-treatments were carried out following the same procedure as in Example 9 except that butene-1 was repalced with 4-methylpentene-1, so that 41 g of a powdery copolymer was obtained. According to ¹³C-NMR analysis, it was confirmed that the ethylene unit was present in a ratio of 6.2% by weight (9.1 mole%) and the 4-methylpentene-1 unit was present in a ratio of 2.4% by weight (1.2 mole%) in the copolymer, a ratio of the intensity of a peak at about 20.2 ppm to the sum of the intensities of the total peaks at about 19-22 ppm was 0.65, η was 0.43, and MW/MN was 2.2. The copolymer powder was molded into a sheet having a thickness of 1 mm in the similar manner, and properties and physical properties were then measured. As a result, tensile yield strength was 92 bar (92 kg/cm²,) elongation was 163%, and values of Izod impact strength were 24 and 55 kg·cm/cm (at 23°C and -10°C, respectively), and haze was 14%.

## Claims

1. A syndiotactic polypropylene copolymer comprising 70 to 99.9 mole% of propylene and 0.1 to 30 mole% of at least one olefin having 2 or 4 to 25 carbon atoms wherein in the ¹³C-NMR spectrum of said syndiotactic polypropylene copolymer, said copolymer exhibits a ratio of the intensity of a peak at about 20.2 ppm to the sum of the intensities of the total peaks attributable to methyl groups in propylene units at about 19 - 22 ppm of 0.3 or more.

2. A syndiotactic polypropylene copolymer according to Claim 1 comprising 80 to 99.9% by weight of propylene and 0.1 to 20% by weight of ethylene wherein in the ¹³C-NMR spectrum of said syndiotactic polypropylene copolymer, said copolymer exhibits a ratio of the intensity of a peak at about 20.2 ppm to the sum of the intensities of the total peaks attributable to methyl groups in propylene units at about 19-22 ppm of 0.5 or more.

3. A syndiotactic polypropylene copolymer according to Claim 1 comprising 70 to 99.87% by weight of propylene and 0.13 to 30% by weight of butene wherein in the ¹³C-NMR spectrum of said syndiotactic polypropylene copolymer, said copolymer exhibits a ratio of the intensity of a peak at about 20.2 ppm to the sum of the intensities of the total peaks attributable to methyl groups in propylene units at about 19-22 ppm of 0.5 or more.

4. A syndiotactic polypropylene copolymer according to Claim 1 comprising 70 to 99.81% by weight of propylene and 0.19 to 30% by weight of 4-methylpentene-1 wherein in the ¹³C-NMR spectrum of said syndiotactic polypropylene copolymer, said copolymer exhibits a ratio of the intensity of a peak at about 20.2 ppm to the sum of the intensities of the total peaks attributable to methyl groups in propylene units at about 19-22 ppm of 0.5 or more.

5. A syndiotactic polypropylene copolymer according to Claim 1 comprising 70 to 99.81% by weight of propylene and 0.19 to 30% by weight of hexene-1 wherein in the ¹³C-NMR spectrum of said syndiotactic polypropylene copolymer, said copolymer exhibits a ratio of the intensity of a peak at about 20.2 ppm to the sum of the intensities of the total peaks attributable to methyl groups in propylene units at about 19-22 ppm of 0.5 or more.

6. A syndiotactic polypropylene copolymer according to Claim 1 comprising 0.1 to 20% by weight of ethylene, 0.13 to 20% by weight of butene and the balance of propylene.

7. A syndiotactic polypropylene copolymer according to Claim 1 comprising 0.1 to 20% by weight of ethylene, 0.19 to 20% by weight of an α-olefin having 6 carbon atoms and the balance of propylene.

## Patentansprüche

1. Ein syndiotaktisches Polypropylencopolymer, das 70 bis 99,9 Mol-% Propylen und 0,1 bis 30 Mol-% wenigstens eines Olefins mit 2 oder 4 bis 25 Kohlenstoffatomen umfaßt, wobei in dem ¹³C-NMR-Spektrum des syndiotaktischen Polypropylencopolymeren das Copolymer ein Verhältnis der Intensität eines Peaks bei etwa 20,2 ppm zu der Summe der Intensitäten aller Peaks, die Methylgruppen in Propylen-Einheiten bei etwa 19 bis 22 ppm zuzuschreiben sind, von 0,3 oder mehr aufweist.

2. Ein syndiotaktisches Polypropylencopolymer nach Anspruch 1, das 80 bis 99,9 Gew.-% Propylen und 0,1 bis 20 Gew.-% Äthylen umfaßt, bei dem in dem ¹³C-NMR-Spektrum von dem syndiotaktischen Polypropylencopolymer das Copolymer ein Verhältnis der Intensität eines Peaks bei etwa 20,2 ppm zu der Summe der Intensitäten aller Peaks, die Methylgruppen in Propylen-Einheiten bei etwa 19 bis 22 ppm zuzuschreiben sind, von 0,5 oder mehr aufweist.

3. Ein syndiotaktisches Polypropylencopolymer nach Anspruch 1, das 70 bis 99,87 Gew.-% Propylen und 0,13 bis 30 Gew.-% Buten umfaßt, bei dem in dem ¹³C-NMR-Spektrum von dem syndiotaktischen Polypropylencopolymer das Copolymer ein Verhältnis der Intensität eines Peaks bei etwa 20,2 ppm zu der Summe der Intensitäten aller Peaks, die Methylgruppen in Propylen-Einheiten bei etwa 19 bis 22 ppm zuzuschreiben sind, von 0,5 oder mehr aufweist.

4. Ein syndiotaktisches Polypropylencopolymer nach Anspruch 1, das 70 bis 99,81 Gew.-% Propylen und 0,19 bis 30 Gew.-% 4-Methylpenten-1 umfaßt, bei dem in dem ¹³C-NMR-Spektrum von dem syndiotaktischen Polypropylencopolymer das Copolymer ein Verhältnis der Intensität eines Peaks bei etwa 20,2 ppm zu der Summe der Intensitäten aller Peaks, die Methylgruppen in Propylen-Einheiten bei etwa 19 bis 22 ppm zuzuschreiben sind, von 0,5 oder mehr aufweist.

5. Ein syndiotaktisches Polypropylencopolymer nach Anspruch 1, das 70 bis 99,81 Gew.-% Propylen und 0,19 bis 30 Gew.-% Hexen-1 umfaßt, bei dem in dem ¹³C-NMR-Spektrum von dem syndiotaktischen Polypropylencopolymer das Copolymer ein Verhältnis der Intensität eines Peaks bei etwa 20,2 ppm zu der Summe der Intensitäten aller Peaks, die Methylgruppen in Propylen-Einheiten bei etwa 19 bis 22 ppm zuzuschreiben sind, von 0,5 oder mehr aufweist.

6. Ein syndiotaktisches Polypropylencopolymer nach Anspruch 1, das 0,1 bis 20 Gew.-% Äthylen, 0,13 bis 20 Gew.-% Buten und als Rest Propylen aufweist.

7. Ein syndiotaktisches Polypropylencopolymer nach Anspruch 1, das 0,1 bis 20 Gew.-% Äthylen, 0,19 bis 20 Gew.-% eines α-Olefins mit 6 Kohlenstoffatomen und als Rest Propylen aufweist.

## Revendications

1. Un copolymère de polypropylène syndiotactique comprenant 70 à 99,9 % molaires de propylène et 0,1 à 30 % molaires d'au moins une oléfine ayant 2 ou 4 à 25 atomes de carbone, où, dans le spectre de ¹³C-RMN dudit copolymère de polypropylène syndiotactique, ledit copolymère présente un rapport de l'intensité d'un pic à environ 20,2 ppm à la somme des intensités des pics totaux attribuables aux groupes méthyles des motifs de propylène à environ 19-22 ppm de 0,3 ou plus.

2. Un copolymère de polypropylène syndiotactique selon la revendication 1, comprenant 80 à 99,9 % en poids de propylène et 0,1 à 20 % en poids d'éthylène, où, dans le spectre de ¹³C-RMN dudit copolymère de polypropylène syndiotactique, ledit copolymère présente un rapport de l'intensité d'un pic à environ 20,2 ppm à la somme des intensités des pics totaux attribuables aux groupes méthyles des motifs de propylène à environ 19-22 ppm de 0,5 ou plus.

3. Un copolymère de polypropylène syndiotactique selon la revendication 1, comprenant 70 à 99,87 % en poids de propylène et 0,13 à 30 % en poids de butène, où, dans le spectre de ¹³C-RMN dudit copolymère de polypropylène syndiotactique, ledit copolymère présente un rapport de l'intensité d'un pic à environ 20,2 ppm à la somme des intensités des pics totaux attribuables aux groupes méthyles des motifs de propylène à environ 19-22 ppm de 0,5 ou plus.

4. Un copolymère de polypropylène syndiotactique selon la revendication 1, comprenant 70 à 99,81 % en poids de propylène et 0,19 à 30 % en poids de 4-méthylpentène-1, où, dans le spectre de ¹³C-RMN dudit copolymère de polypropylène syndiotactique, ledit copolymère présente un rapport de l'intensité d'un pic à environ 20,2 ppm à la somme des intensités des pics totaux attribuables aux groupes méthyles des motifs de propylène à environ 19-22 ppm de 0,5 ou plus.

5. Un copolymère de polypropylène syndiotactique selon la revendication 1, comprenant 70 à 99,81 % en poids de propylène et 0,19 à 30 % en poids d'hexène-1, où, dans le spectre de ¹³C-RMN dudit copolymère de polypropylène syndiotactique, ledit copolymère présente un rapport de l'intensité d'un pic à environ 20,2 ppm à la somme des intensités des pics totaux attribuables aux groupes méthyles des motifs de propylène à environ 19-22 ppm de 0,5 ou plus.

6. Un copolymère de polypropylène syndiotactique selon la revendication 1, comprenant 0,1 à 20 % en poids d'éthylène, 0,13 à 20 % en poids de butène, le complément étant du propylène.

7. Un copolymère de polypropylène syndiotactique selon la revendication 1, comprenant 0,1 à 20 % en poids d'éthylène, 0,19 à 20 % en poids d'une α-oléfine ayant 6 atomes de carbone, le complément étant du propylène.
